# EUROPÄISCHE PATENTANMELDUNG

(11) **EP 3 522 483 A1**
(43) Veröffentlichungstag der Anmeldung: **07.08.2019**
(21) Anmeldenummer: 18184117.2
(22) Anmeldetag: 18.07.2018
(51) Int. Cl.: H04L 29/06, H04L 29/08

(54) **VERFAHREN ZUR DATEN-KOMMUNIKATION IN EINEM INSBESONDERE INDUSTRIELLEN NETZWERK, STEUERUNGSVERFAHREN, VORRICHTUNG, COMPUTERPROGRAMM SOWIE COMPUTERLESBARES MEDIUM**

(30) Priorität: 31.01.2018 EP 18154319
(71) Anmelder: Siemens Aktiengesellschaft, 80333 München (DE)
(72) Erfinder: Kießling, Marcel, 91235 Velden (DE); Talanis, Thomas, 91336 Heroldsbach (DE)

(57) **Zusammenfassung**

Die Erfindung betrifft ein Verfahren zur Daten-Kommunikation in einem insbesondere industriellen Netzwerk, bei dem Daten zwischen einem Steuersystem, insbesondere einer SPS (6), und einem oder mehreren an einem Feldbus (1) befindlichen Geräten (3, 4, 5), insbesondere wenigstens einem Sensor und/oder wenigstens einem Aktor, ausgetauscht werden, wobei eine Datenübertragung zwischen dem Steuersystem (6) und dem Feldbus (1) über wenigstens einen Stream (16, 17, 28) erfolgt, für den an einem oder mehreren Knotenpunkten, insbesondere Bridges und/oder Switches, Ressourcen reserviert sind oder werden. Darüber hinaus betrifft die Erfindung ein Steuerungsverfahren, eine Vorrichtung, ein Computerprogramm und ein computerlesbares Medium.

## Beschreibung

Die Erfindung betrifft ein Verfahren zur Daten-Kommunikation in einem insbesondere industriellen Netzwerk, bei dem Daten zwischen einem Steuersystem, insbesondere einer SPS, und einem oder mehreren an einem Feldbus befindlichen Geräten, insbesondere wenigstens einem Sensor und/oder wenigstens einem Aktor, ausgetauscht werden. Darüber hinaus betrifft die Erfindung ein Steuerungsverfahren, eine Vorrichtung, ein Computerprogramm und ein computerlesbares Medium.

In der industriellen Automatisierung kommen zur automatisierten Steuerung bzw. Regelung beispielsweise von Maschinen, Anlagen bzw. industriellen Prozessen spezielle Steuersysteme, insbesondere sogenannten speicherprogrammierbaren Steuerungen, abkürzt SPS (englisch: Programmable Logic Controller, PLC) zum Einsatz.

Eine SPS ist in der Regel über eine Mehrzahl von Eingangswerte liefernden Sensoren und eine Mehrzahl von Steuerwerten empfangenden Aktoren an die Maschine, Anlage bzw. einen Prozess angebunden.

Rein beispielhaft seien für Sensoren Druck- und Temperaturaufnehmer, Inkrementalgeber sowie Füllstandssensoren genannt. Aktoren können beispielsweise in Form von Schaltschützen, elektrischen Ventile und Module für Antriebssteuerungen gegeben sein. Die Sensoren und Aktoren sind nahe an dem bzw. den zu automatisierenden Prozess (en) angeordnet, um die benötigten Messwerte an den relevanten Stellen zu erfassen bzw. an erforderlichen Stellen auf den Prozess einwirken zu können. Die Position der Aktoren ist auch durch den Aufbau der Maschine bzw. Anlage festgelegt.

Im Betrieb erhält das Steuersystem von den Sensoren mittels dieser erfasste Messwerte, berechnet (u.a.) auf deren Basis Steuerwerte für die Aktoren und sendet diese an die Aktoren.

Ein Steuersystem, insbesondere eine SPS kann auf verschiedene Weise realisiert sein, beispielsweise als Einzelgerät bzw. "Baugruppe" oder auch in Form einer Einsteckkarte für einen PC etc. Eine weitere Möglichkeit besteht darin, eine Steuersystem über eine Softwareemulation bereitzustellen. In diesem Fall spricht man - in Abgrenzung zu einer physischen SPS etwa in Form eines Einzelgerätes oder einer Einsteckkarte, - auch von einem virtuellen Steuersystem. In diesem Falle ist bevorzugt ein Programm, also eine Software, oder eine Programm- bzw. Software-Sammlung auf wenigstens einer Recheneinrichtung, bevorzugt einem PC abgelegt und emuliert die Funktion(en) des Steuersystems. Die wenigstens eine Recheneinrichtung umfasst hierzu bevorzugt in an sich bekannter Weise zumindest einen Prozessor, Arbeitsspeicher und Datenspeicher.

Um nicht für jeden Sensor und/oder Aktor ein eigenes Kabel zum Steuersystem legen zu müssen, sind Kommunikationsnetzwerke, sogenannte Feldbusse, entwickelt worden.

Feldbusse für industrielle Anwendungen betreffende Normen sind beispielsweise IEC 61158, IEC 61784-1 bis IEC 61784-5.

Angefangen hat dies mit einfachen Bus-Systemen. Ein einfaches Bus-System zeichnet sich in der Regel dadurch aus, dass die an ihn angeschlossenen einzelnen Geräte über eine Sammelleitung miteinander verbunden sind. Dabei ist typischerweise von dem Steuersystem, insbesondere der SPS, ein Bus-Netzwerk zu allen Sensoren und Aktoren, die Feldgeräte darstellen, verlegt worden. Über einen Feldbus können auch weitere Geräte, beispielsweise Bedien- und/oder Anzeigeeinrichtungen mit dem Steuersystem verbunden sein, um Daten von oder für diese zu übertragen. Als Beispiel für ein solches physisches Bus-System sei PROFIBUS genannt.

Unter Verwendung eines Feldbusses können von den Sensoren erfasste digitalisierte Daten an die Steuerung, insbesondere SPS, übertragen werden. Gleiches gilt für die von der Steuerung ermittelten Steuerwerte, die an die Aktoren zu übertragen sind.

Für die Datenübertragung werden heutzutage meist Ethernetbasierte Feldbusse eingesetzt (zu Ethernet siehe IEEE 802, insbesondere IEEE 802.3, z.B. PROFINET RT. Die Daten werden dabei in einem speziell für die Steuerungsanwendung aufgebauten Netzwerk zur SPS übertragen. Das gesamte logische Grundkonzept mit einem Bus zwischen Steuerung und Sensoren/Aktoren ist jedoch im Engineering erhalten geblieben. Das in Form des Feldbusses gegebene, auf Ethernet basierende Kommunikationsnetzwerk wird weiterhin wie ein einziges logisches Kabel (Bus Netzwerk) betrachtet. Die verfügbare Bandbreite (in der Regel 100 Mbit/s) wird zumeist fest auf eine Hälfte (in der Regel 50 Mbit/S) für Echtzeit-Daten und eine weitere Hälfte (in der Regel 50 Mbit/s) für anderen Verkehr aufgeteilt. Die Einhaltung der Bandbreite muss dann durch die Auslegung der Echt-zeit-Anwendung sichergestellt werden. Netzwerkgeräte erkennen die Echtzeitdaten anhand von proprietären Erweiterungen oder durch die Verwendung von speziellen Adressen und ordnen diese den entsprechenden Ressourcen zu.

Um einen reibungsfreien Ablauf gewährleisten zu können, hat die Übertragung in der Regel in Echtzeit zu erfolgen. Damit die Echtzeitanwendung nicht gestört wird, ist das Netzwerk exklusiv für die Steuerung, insbesondere SPS da. Der Zugriff auf Daten in dem Netzwerk erfolgt durch einen weiteren Port des Steuersystems, mit dem ein überlagertes Netzwerk angeschlossen werden soll. Im Feldbus-Netzwerk selbst gibt es keinen besonderen Schutz der Ressourcen - das Netzwerk stellt die Funktion eines logischen Bus zum Datenaustausch bereit.

Ein Steuersystem, insbesondere SPS, enthält in der Regel alle für den Betrieb des Feldbusses notwendigen Services, insbesondere auch Netzwerkservices.

Nach Kenntnisstand der Anmelderin basieren derzeit sowohl der Feldbus als auch das überlagerte Netzwerk, an das das Steuersystem angeschlossen ist, meist auf Ethernet. Deswegen wird die geplante saubere Trennung der zwei logischen Ebenen nicht immer physikalisch eingehalten. Die Anmelderin hat festgestellt, dass dies, da es keinen Schutz der verwendeten Ressourcen im Feldbus-Netzwerk gibt, zu Problemen führen kann. Standard Ethernet Netzwerkgeräte unterscheiden nur anhand der in den Telegrammen enthaltenen Priorität, wie die Daten weitergeleitet werden sollen. Jeder Priorität wird dabei eine Queue zugeordnet. Wenn mehrere voneinander unabhängige Automatisierungsanwendungen in einem Netzwerk laufen, gibt es keine Überprüfung der Ressourcen. Andere Anwendungen mit der gleichen Priorität stören ebenfalls die Übertragung von Echtzeitdaten im Netzwerk.

Um eine Beeinflussung so gering wie möglich zu halten, ist es nach der Erfahrung der Anmelderin empfehlenswert, das Steuersystem möglichst in einem physikalisch getrennten Netzwerk zu betreiben. Andere Anwendungen im gleichen Netzwerk sollten vermieden werden. Um Störungen zu verhindern, sollte der Datenzugriff ferner über eine Kopplung in dem Steuersystem erfolgen.

Durch die hohen Anforderungen an das Steuersystem - und die exklusive Nutzung des Netzwerkes durch dieses - ist das Steuersystem nach Kenntnisstand der Anmelderin in der Regel direkt in der Umgebung der Sensoren und Aktoren vorgesehen, also ebenfalls nah an dem bzw. den zu automatisierenden Prozess(en). Es muss entsprechend in ähnlichen Umgebungen funktionieren wie die Sensoren und Aktoren, die in der Regel überaus rau sind. Die hohe Funktionalität des Steuersystems in Kombination mit der geforderten Zuverlässigkeit auch in rauen Umgebungen führt dabei zu einem hohen Preis.

Im Rahmen der IEEE-Standardisierung wurde in der Arbeitsgruppe AVB (Audio-Video-Bridging) die Technologie Ethernet (s. IEEE 802) um Mechanismen zur Erreichung von garantierter QoS ("Quality of Service" - auch als Dienstgüte bezeichnet) erweitert. Dabei wurde eine neue Art von Verkehr definiert, die sogenannten Streams, über welche die Qualität (QoS) in einem Netzwerk garantiert werden kann. Ein Stream gemäß diesen Standards stellt eine geschützte, unidirektionale Kommunikationsverbindung von einem auch als Talker bezeichneten, eine Datenquelle bildenden Gerät zu einem oder mehreren auch als Listener bezeichneten, die Datensenken, also Empfänger darstellenden Gerät(e) dar.

Time Sensitive Networking (TSN) bezeichnet eine Reihe von Standards, die den Bridging Standard IEEE 802.1Q um Mechanismen zur Übertragung echtzeitkritischer Daten über Ethernet-Netze erweitert. Zu den genannten Standards gehören beispielsweise Zeitsynchronisation (IEEE 802.1AS-Rev), Frame Preemption (IEEE 802.1Qbu) und Reservierung (IEEE 802.1Qca, IEEE 802.1Qcc) sowie weitere Standards.

Vor der eigentlichen Datenübertragung via Stream erfolgt eine Registrierung und Reservierung, um von dem Netzwerk Garantien für einen verlustfreien Echt-Zeit-Transfer von Datenframes und eine pünktliche Lieferung zu erhalten. Für einen Stream wird eine Reservierung insbesondere durch ein sogenanntes Stream-Reservation-Protokoll (SRP) durchgeführt. Jeder Stream hat eine eigene Adresse, um die Weiterleitung zu kontrollieren.

"Multiple Listeners per Stream" wurde in AVB eingeführt, um die Anzahl von Echtzeit-Datenflüssen (IEEE802 nennt diese "Stream") von einer Quelle (Talker) zu mehreren Zielen (Listenern) zu reduzieren. Konkret wird die Datenübertragung von einem Talker an mehrere Listener über nur einen Stream ermöglicht. In der ebenfalls auf die Anmelderin zurückgehenden europäischen Patentanmeldung mit dem Aktenzeichen EP 18 15 4319 ist ferner ein Stream-Reservierungs-Modell offenbart, welches "Multiple Talker per Listener" ermöglicht, konkret die Übertragung von Daten von mehreren Talkern an einen Listener über nur einen Stream.

Aufgabe der vorliegenden Erfindung ist es, ein Verfahren zur Datenkommunikation zwischen Komponenten einer industrielle Automatisierungsanwendung anzugeben, welches eine zuverlässige Echtzeit-Kommunikation ermöglicht und sich gleichzeitig mit vertretbarem Aufwand durchführen lässt, insbesondere mit vertretbaren Hardware-Kosten einhergeht.

Diese Aufgabe wird bei einem Verfahren der eingangs genannten Art dadurch gelöst, dass eine Datenübertragung zwischen dem Steuersystem und dem Feldbus über wenigstens einen Stream erfolgt, für den an einem oder mehreren Knotenpunkten, insbesondere Bridges und/oder Switches, Ressourcen reserviert sind oder werden.

Der Grundgedanke der vorliegenden Erfindung liegt mit anderen Worten darin, AVB- bzw. TSN-Mechanismen zu verwenden, um ein Steuersystem, insbesondere eine speicherprogrammierbare Steuerung (SPS), an ein Feldbusnetzwerk in Prozessnähe über einen oder mehrere AVB- bzw. TSN-Streams anzubinden.

Erfindungsgemäß wird wenigstens ein Stream zwischen einem Steuersystem und einem Feldbus bzw. Feldbussegment/Feldbusteil aufgebaut, um die Funktionalität des Steuersystems in den Feldbus bzw. das Feldbussegment/Feldbusteil zu bringen. An einem oder mehreren Knotenpunkten sind bzw. werden hierzu Ressourcen reserviert, wobei es sich zweckmäßiger Weise um einen oder mehrere, insbesondere alle Knotenpunkte handelt, die zwischen dem (jeweiligen) Steuersystem bzw. wenigstens einer Einrichtung dieser und dem (jeweiligen) Feldbus, insbesondere auf einem das (jeweilige) Steuersystem bzw. wenigstens eine Einrichtung dieses und den (jeweiligen) Feldbus verbindenden Netzwerkpfad.

Selbstverständlich ist es möglich, dass das erfindungsgemäße Verfahren zum Einsatz kommt, um einen Datenaustausch zwischen zwei oder mehr Steuersystemen und einem Feldbus und/oder einem Steuersystem und zwei oder mehr Feldbussen oder auch mehreren Steuersystemen und mehreren Feldbussen zu ermöglichen.

Bei dem Feldbus oder - sofern mehrere vorhanden - den Feldbussen kann es sich um physische Feldbusse (beispielsweise PROFIBUS) und/oder auf einem Ethernet-Netzwerk ohne AVB- oder TSN-Erweiterung basierende logische Feldbusse (beispielsweise PROFINET) handeln.

Bei dem Steuersystem, ggf. den Steuersystemen, und dem Feldbus, ggf., den Feldbussen, nebst daran jeweils anliegendem Gerät bzw. Geräten handelt es sich insbesondere um Bestandteile einer Automatisierungsanlage beispielsweise für einen technischen Prozess oder ein Fahrzeug.

Sämtliche für das Einrichten des bzw. der Streams benötigten Parameter sind in der Regel ohnehin im Engineering eines Feldbusses vorhanden, insbesondere in dem TIA Portal, und können auf einfache Weise verwendet werden. Als Beispiele für diese Parameter seien die Paketgröße, Paketanzahl, die Bandbreite, der update-Cycle, das Sendeintervall und die Latenz genannt.

Die AVB- bzw. TSN-Technologie ist vor allem durch den bereits erfolgten Einsatz im Automobilbereich und/oder die Herkunft von AVB (Audio Video Bridging) aus Heimnetzwerken in deutlich preiswerteren Netzwerkkomponenten verfügbar als z. B. Funktionen wie Mac-in-Mac, die bisher nur Provider in Netzwerken verwenden. Durch die erfindungsgemäße Nutzung vergleichsweise kostengünstiger und standardisierter TSN-Mechanismen (Streams) kann auf andere Mechanismen zum Tunneln einer Datenübertragung in Ethernet-Netzwerken, wie etwa VXLAN, Mac-in-Mac, SPB-V, die bisher nur in teureren Hardwarekomponenten vorhanden sind, und zudem keinen Ressourcenschutz für eine insbesondere virtualisierte Verbindungsstrecke bieten, verzichtet werden.

Die erfindungsgemäße Nutzung eines oder mehrerer Streams führt dabei zu einer robusten, garantierten Übertragung mit gesicherten Ressourcen und garantiert die Einhaltung von einer geforderten Latenz für Echtzeit-Anwendungen. Die zu übertragenden Daten sind durch die Reservierung vor einer zu großen Einwirkung von anderen Echtzeitanwendungen und/oder sonstigen Anwendungen im Netzwerk geschützt. Andere Anwendungen haben dann insbesondere nur eine kleine, aber genau bekannte Auswirkung auf die Übertragungszeit. Durch die Ressourcenreservierung kommt es nicht zum Verlust von Echtzeitdaten.

Durch die gesicherte Datenübertragung als Stream(s) wird es möglich, ein Steuersystem - oder zumindest Teile eines solchen - außerhalb, insbesondere entfernt von der eigentlichen Prozessumgebung anzuordnen. Da es die Erfindung ermöglicht, ein Steuersystem bzw. Teile dieses außerhalb der in der Regel sehr rauen Prozessumgebung anzuordnen, muss das Steuersystem keine besonderen Anforderungen in dieser Hinsicht erfüllen und dessen Kosten fallen - im Vergleich zum Stand der Technik - deutlich geringer aus.

Ein weiterer erheblicher Vorteil der erfindungsgemäßen Vorgehensweise besteht darin, dass es die Stream-Anbindung ermöglicht, eine Automatisierungsaufgabe beispielsweise auf ein lokales Data Center und/oder einen oder mehrere Industrie-PC(s) auszulagern.

Durch den bzw. die Streams entsteht einer bzw. entstehen ferner mehrere Tunnel im Netzwerk, der bzw. die dynamisch verändert werden kann bzw. können. Die Kommunikationsverbindung zwischen Steuersystem(en) und Feldbus(sen) kann so bei einem Positionswechsel des Steuersystems (beispielsweise bei einer virtuellen Steuereinrichtung, insbesondere SPS, eine Änderung der Ablaufumgebung), transparent für die Feldbusteilnehmer geändert werden.

Die Übertragung von Datenframes über den wenigstens einen Stream ist bevorzugt derart, dass durch einen Shaper, insbesondere gemäß IEEE802.1, die Einhaltung der Bandbreite garantiert wird. Durch die garantierte Bandbreiteneinhaltung kann auf dem Weg in jedem Knotenpunkt, etwa jeder Bridge eine maximale Latenz garantiert werden.

Durch den Credit Based Shaper (CBS) gemäß IEEE 802.1Qav beispielsweise wird bei einem AVB- oder TSN-Stream beispielsweise bei der Übertragung bzw. Weiterleitung jedes Datenframes eine Pause gemacht, deren Länge von der Größe des Datenframes und der reservierten Bandbreite abhängt. Dabei gilt, dass die Pause umso länger ist, je größer der vor der Pause übertragene bzw. weitergeleitete Datenframe war, also umso größer die weitergeleitete bzw. übertragene Datenmenge war. Der Zusammenhang ist dabei insbesondere linear. Die Länge der Pause entspricht insbesondere der Länge der für die Übertragung des jeweiligen Datenframes erforderlichen Zeit multipliziert mit einem von der reservierten Bandbreite abhängigen Faktor. Sind beispielsweise 25 % der Bandbreite für einen Stream reserviert, wird insbesondere nach jedem Datenframe eine Pause gemacht, die dreimal so lang ist, wie die für dessen Übertragung erforderliche Zeit. Sind 50% reserviert, ist die Pause so lang, wie die Übertragungszeit und so weiter. Der Faktor für die Länge der Pause ist aufgrund der Reservierung bekannt und wird fest eingerichtet. Über diese Vorgehensweise wird garantiert, dass die Bandbreite eingehalten wird. Frames, die an einem Knotenpunkt, insbesondere einer Bridge bzw. einem Switch des AVB- bzw. TSN-Netzwerkes ankommen, können immer sofort weitergeleitet werden.

Besonders bevorzugt kommt wenigstens ein virtuelles Steuersystem, insbesondere wenigstens eine virtuelle SPS, zum Einsatz, die über wenigstens einen Stream an einen Feldbus angebunden wird. Eine solche wird auch als vSPS bzw. engl. vPLC bezeichnet. Eine bevorzugte Ausführungsform des erfindungsgemäßen Verfahrens zeichnet sich entsprechend dadurch aus, dass wenigstens ein Steuersystem als virtuelles Steuersystem ausgebildet ist, das bevorzugt wenigstens eine Recheneinrichtung, insbesondere in Form wenigstens eines Computers umfasst, und auf der wenigstens ein Computerprogramm abgelegt ist, das die Funktionen eines Steuersystems, insbesondere einer speicherprogrammierbaren Steuerung (SPS) emulieren kann. Die Virtualisierung ermöglicht dabei insbesondere den Einsatz von Standard-IT-Hardware in geschützten, nicht rauen Umgebungen.

Vor allem für den Fall, dass wenigstens ein virtuelles Steuersystem in Verbindung mit der Stream-Anbindung zum Einsatz kommt, ist es gemäß der vorliegenden Erfindung auf besonders einfache Weise möglich, eine Trennung der Aufgaben vorzusehen, etwa die Dienste der Netzwerkadministration von den Steuerungs- bzw. Automatisierungsaufgaben zu trennen. Dadurch wird jede Funktion als einfacheres Modul realisierbar. Durch die Trennung der Aufgaben kann eine vergleichsweise einfache Automatisierungsfunktion ohne zusätzliche Services, die in einem (physischen) Steuersystem, insbesondere SPS benötigt werden, realisiert werden. Bisher war dies nicht möglich, da zwei physikalisch getrennte Netzwerke bevorzugt wurden, um die Echtzeitfähigkeit zu gewährleisten und nur das Steuersystem, insbesondere die SPS Zugriff auf den logischen Feldbus hatte.

Eine Trennung von Automatisierungsaufgabe und Netzwerkdiensten kann insbesondere durch eine Aufteilung der Daten anhand der Frame ID erfolgen.

Die Zuordnung von Datenframes zu einem Tunnel bzw. Stream kann in den Endpunkten anhand des Protokolls erfolgen. Bei PROFINET beispielsweise kann auch zusätzlich die Frame ID, also ID innerhalb der Datenframes verwendet werden. Dadurch wird es möglich, dass für jeden Service, insbesondere PROFINET-Service ein eigener Tunnel, also Stream ausgewählt wird. Dies unterstützt zusätzlich die Trennung der Automatisierungsfunktion von unterschiedlichen Netzwerk-Diensten in verschiedene virtuelle Bestandteile des Steuersystems, insbesondere der SPS.

Weiterhin kann insbesondere unter Verwendung eines Reservierungsprotokolls und/oder Rückgriff auf Parameter aus einem vorhandenen Engineering, insbesondere TIA-Portal, eine automatische Konfiguration des bzw. der Streams erfolgen, was die Handhabung insbesondere von virtuellen Steuersystemen erheblich erleichtert und den Einsatz durch Anwender ohne spezielles IT Wissen ermöglicht.

Auch kann vorgesehen sein, dass das Steuersystem eine Netzwerksteuereinrichtung, welche bevorzugt ausgebildet und eingerichtet ist, um Netzwerkdienste, insbesondere Feldbus-Netzwerkdienste auszuführen, und eine Prozesssteuereinrichtung, welche bevorzugt ausgebildet und eingerichtet ist, um auf Basis von mit Sensoren erfassten Messwerten Werte für Aktoren zu ermitteln, umfasst. Dann kann vorgesehen sein, dass eine Datenübertragung zwischen der Netzwerksteuereinrichtung und dem Feldbus über wenigstens einen Stream erfolgen, und/oder die Prozesssteuereinrichtung an dem Feldbus liegt. Eine Netzwerksteuereinrichtung kann beispielsweise durch eine Recheneinrichtung, beispielsweise einen PC, mit darauf abgelegter Software oder Softwaresammlung für die Realisierung der Netzwerkdienste gegeben sein.

Insbesondere im Bereich von Anwendungen, die eine extrem kurze Zykluszeit von wenigen Millisekunden bis zu einigen Mikrosekunden, insbesondere im Bereich von 1 ms bis zu 31,25 µs, erfordern, wie es bei Motion Control Anwendungen der Fall sein kann, kommt eine Auslagerung der Automatisierungsfunktion, insbesondere der Ermittlung von Stellwerten für Aktoren basierend auf Sensordaten, an einen prozessentfernten Ort ggf. nicht in Frage. In einem solchen Falle kann vorgesehen sein, dass nur eine Teil der Aufgaben eines Steuersystems, konkret die Netzwerkdienste ausgelagert und erfindungsgemäß über wenigstens einen Stream angebunden werden, die eigentliche Automatisierungsaufgabe(n) hingegen am Ort des Prozesses verbleibt. Entsprechend sieht diese Ausgestaltung vor, dass das Steuersystem eine Prozesssteuereinrichtung für die eigentliche Automatisierungsaufgabe und eine Netzwerksteuereinrichtung für die Realisierung der Netzwerkdienste umfasst und erstere am Feldbus anliegt, und/oder Letztere ausgelagert und via Stream(s) angebunden ist. Für die eigentliche Automatisierungsaufgabe, die in Prozessnähe verbleibt, kann dann auf einfachere Komponenten zurückgegriffen werden, so dass auch in diesem Falle eine deutliche Kostenersparnis gegenüber dem Stand der Technik realisierbar ist.

Eine Auslagerung (nur) der Netzwerkdienste kann alternativ oder zusätzlich auch im Falle von komplexeren Netzwerken besonders vorteilhaft sein.

Eine weitere bevorzugte Ausführungsform des erfindungsgemäßen Verfahrens zeichnet sich dadurch aus, dass das Steuersystem bzw. wenigstens eine Einrichtung des Steuersystems über einen Verbindungsknotenpunkt, der einen an dem Feldbus befindlichen Feldbusport und wenigstens einen Port in Richtung des Steuersystems bzw. der wenigstens einen Einrichtung des Steuersystems aufweist, mit dem Feldbus verbunden ist, und die Datenübertragung zwischen dem Steuersystem bzw. der wenigstens einen Einrichtung des Steuersystems und dem Verbindungsknotenpunkt über wenigstens einen Stream erfolgt, wobei bevorzugt an dem Verbindungsknotenpunkt und/oder an einem oder mehreren zwischen dem Verbindungsknotenpunkt und dem Steuersystem bzw. der wenigstens einen Einrichtung des Steuersystems liegenden weiteren Knotenpunkten Ressourcen für die Datenübertagung via Stream reserviert sind oder werden.

Der Verbindungsknotenpunkt bildet praktisch einen Connector zwischen dem Feldbus und Steuersystem, insbesondere SPS, weshalb er auch als Steuersystem- bzw. SPS-Connector (engl.: PLC-Connector) bezeichnet werden kann. Er übernimmt insbesondere die Funktion eines Proxys und/oder bildet einen Endpunkt des Streams/Tunnels. Bei dem Verbindungsknotenpunkt handelt es sich bevorzugt um ein 2- oder Mehr-Port-Gerät, welches zumindest einen Port im Feldbus hat und zumindest einen weiteren Port in Richtung des Steuersystems bzw. wenigstens einer Einrichtung bzw. Komponente des Steuersystems in einem überlagerten Netzwerk, die beispielsweise Netzwerkservices bereitstellt und/oder andere Funktionen übernimmt.

Dass nur ein Teil, insbesondere nur wenigstens eine Einrichtung des Steuersystems über den Verbindungsknotenpunkt mit dem Feldbus verbunden ist, kann beispielsweise dann der Fall sein, wenn (nur) die Netzwerkdienste und/oder Überwachungsfunktionen ausgelagert und via Stream(s) an den Feldbus angebunden sind, wenigstens eine weitere, insbesondere die Automatisierungsaufgabe(n) übernehmende Komponente bzw. Einrichtung des Steuersystems, die via Stream angebunden ist, liegt dann nicht im Feldbus sondern zweckmäßiger Weise außerhalb der Prozessumgebung.

In dem Verbindungsknotenpunkt ist bevorzugt eine logische Konfiguration vorgesehen, welche die Anbindung des Steuersystems bzw. dessen wenigstens einer Einrichtung an den Feldbus via Stream ermöglich, z. B. ist bevorzugt eine PRU in den Verbindungsknotenpunkt integriert. Bei einer PRU handelt es sich um eine programmierbare Funktion in einem Gerät mit mindestens 2 Ports, die je nach Programm empfangene oder zu sendende Frames vor der weiteren internen Verarbeitung oder dem Senden manipulieren kann und Inhalte hinzufügen, ändern und/oder entfernen kann. Das Programm der PRU kann dafür sorgen, dass alle ankommenden Frames, die über einen Tunnel gesendet werden müssen, im übergeordneten Netzwerk als Stream erkennbar sind. Datenframes eines AVB- oder TSN-Streams sind insbesondere über die verwendete Zieladresse und/oder die VLAN ID und/oder VLAN Priorität erkennbar.

Der Verbindungsknotenpunkt ist weiterhin bevorzugt ausgebildet und eingerichtet, um Datenframes, die von einem oder mehreren im Feldbus befindlichen Geräten stammen und an dem Feldbusport des Verbindungsknotenpunktes ankommen, wenigstens einen Stream-Parameter, insbesondere eine designierte Stream Adresse und/oder eine VLAN ID und/oder eine Priorität zuzuweisen, insbesondere voranzustellen, und über wenigstens einen Port in Richtung des Steuersystems bzw. dessen wenigstens einen Einrichtung weiterzuleiten.

Es wird bevorzugt wenigstens ein Stream-Parameter in einem Header des jeweiligen Datenframes vorgesehen oder dem jeweiligen Datenframe ein (Stream-)Header mit einem oder mehreren Stream-Parametern vorangestellt. Der jeweilige Datenframe umfasst dann insbesondere den Header und dem Header folgende Nutzdaten, die auch als "Payload" bezeichnet werden.

Alternativ oder zusätzlich ist der Verbindungsknotenpunkt ausgebildet und eingerichtet, um aus Datenframes, welche via Stream an einem Port in Richtung des Steuersystems bzw. wenigstens einer Einrichtung dieses ankommen, wenigstens einen Stream-Parameter, insbesondere eine designierte Stream Adresse und/oder eine VLAN ID und/oder eine Priorität zu entfernen und/oder Nutzdaten zu extrahieren, und Datenframes ohne den wenigstens einen entfernten Parameter bzw. die Nutzdaten über den Feldbusport weiterzuleiten. Auch kann vorgesehen sein, dass ein Header der jeweiligen Frames entfernt wird.

Die vorstehend beschriebenen Ausgestaltungen ermöglichen eine besonders reibungsfreie Überführung von Feldbus-Datenframes, welche beispielsweise als Ethernet (ohne AVB- oder TSN-Erweiterung)-Frames oder Datenframes mit einer anderen Codierung vorliegen können, in Stream-fähige Datenframes, insbesondere mit einer designierte Stream Adresse und/oder einer VLAN ID und/oder einer Priorität und/oder anderen Stream-Parametern, die sich in der Regel in einem Frame-Header befinden, und umgekehrt. Der jeweilige Stream-Datenframe umfasst dann insbesondere den Header und dem Header folgende Nutzdaten, die auch als "Payload" bezeichnet werden. Die "Payload" des Stream-Datenframes entspricht dann insbesondere dem Feldbus-Datenframe. In umgekehrter Richtung wird insbesondere wenigstens ein Stream-Parameter bzw. ein Header entfernt.

Es kann sein, das wenigstens ein weiterer Verbindungsknotenpunkt für einen Stream vorgesehen ist. Dieser kann dann insbesondere einen zweiten Endpunkt des Streams bilden und bevorzugt wenigstens einen Port aufweisen, der mit dem Steuersystem bzw. wenigstens einer Einrichtung des Steuersystems verbunden ist oder in dessen Richtung und wenigstens einen weiteren Port in Richtung des ersten Verbindungsknotenpunktes aufweisen. Der weitere Verbindungsknotenpunkt ist dann bevorzugt - analog zu dem ersten - ausgebildet und eingerichtet, um Datenframes, welche von dem Steuersystem bzw. wenigstens einer Einrichtung dieses stammen, und an dem Port des Verbindungsknotenpunktes in Richtung des Steuersystems bzw. wenigstens einer Einrichtung dieses ankommen, wenigstens einen Stream-Parameter, insbesondere eine designierte Stream Adresse und/oder eine VLAN ID und/oder eine Priorität zuzuweisen, insbesondere voranzustellen, und über wenigstens einen Port in Richtung des ersten Verbindungsknotenpunktes weiterzuleiten.

Alternativ oder zusätzlich ist der weitere Verbindungsknotenpunkt ausgebildet und eingerichtet, um aus Datenframes, welche via Stream an einem Port in Richtung des ersten Verbindungsknotenpunktes ankommen, wenigstens einen Stream-Parameter, insbesondere eine designierte Stream Adresse und/oder eine VLAN ID und/oder eine Priorität zu entfernen und/oder Nutzdaten zu extrahieren, und Datenframes ohne den wenigstens einen entfernten Parameter bzw. die Nutzdaten über den Feldbusport weiterzuleiten.

Ein weiterer Verbindungsknotenpunkt ist insbesondere für den Fall vorgesehen, dass das Steuersystem bzw. die wenigstens einen Einrichtung dieses Ethernet-Datenframes sendet, denen für die Übertragung via Stream einer oder mehrere Stream-Parameter voranzustellen sind.

Es kann sein, dass der weitere Verbindungsknoten bzw. dessen Funktion in das Steuersystem bzw. wenigstens eine Einrichtung dieses integriert ist.

Im Rahmen des erfindungsgemäßen Verfahrens werden insbesondere Datenframes via Stream übertragen, welche als Nutzdaten von Sensoren einer Automatisierungsanlage erfasste Messwerte bzw. diese repräsentierende Daten und/oder für Aktoren einer Automatisierungsanlage bestimmte Stellwerte bzw. diese repräsentierende Daten umfassen. Alternativ oder zusätzlich werden, insbesondere bei der Auslagerung der Netzwerkfunktion bzw. -services und/oder Überwachungsfunktionen, Daten zur Konfiguration des Netzwerkes und eines oder mehrerer am Feldbus liegender Geräte, insbesondere Sensoren und/oder Aktoren, und/oder Daten zur periodischen Überwachung eines oder mehrerer am Feldbus liegender Geräte, übertragen.

Weiterhin bevorzugt ist vorgesehen, dass die Datenübertragung zwischen dem Steuersystem bzw. wenigstens einen Einrichtung dieses und dem Feldbus über ein AVB- bzw. TSN-Netzwerk erfolgt. Unter einem AVB- bzw. TSN-Netzwerk ist dabei ein solches zu verstehen, welches einem oder mehreren Audi Video Bridging (AVB) oder Time Sensitive Networking (TSN) Standards genügt, insbesondere einen oder mehrere AVB- bzw. TSN-fähige Knotenpunkte, etwa Switches und/oder Bridges umfasst. Das Netzwerk bzw. die Knotenpunkte sind insbesondere ausgebildet und/oder eingerichtet, um einem oder mehreren AVB_bzw. TSN-Standards zu genügen. Zu den AVB-Standards gehören insbesondere IEEE802.1AS, IEEE802.1Qat, IEEE802.1Qav, IEEE802.1BA und zu den TSN-Standards gehören beispielsweise Zeitsynchronisation (IEEE 802.1AS-Rev), Frame Preemption (IEEE 802.1Qbu) und Reservierung (IEEE 802.1Qca, IEEE 802.1Qcc) sowie weitere Standards.

Der Verbindungsknotenpunkt und/oder gegebenenfalls vorhandene zwischen dem Steuersystem bzw. der wenigstens einen Einrichtung des Steuersystems und dem Verbindungsknotenpunkt liegende weitere Knotenpunkte sind entsprechend bevorzugt als AVB- bzw. TSN-fähige Knotenpunkte ausgebildet. Es kann sich beispielsweise (jeweils) um eine AVB- bzw. TSN-fähige Bridge und/oder einen AVB- bzw. TSN-fähigen Switch oder andere AVB- bzw. TSN-fähige Geräte handeln. Der wenigstens eine Port des Verbindungsknotenpunktes in Richtung des Steuersystems bzw. der wenigstens einen Einrichtung dieses ist bevorzugt ein AVB- bzw. TSN-Port.

Für den Erhalt einer oder mehrere geschützter Verbindungen, also eines oder mehrerer Streams zwischen Steuersystem und Feldbus werden in an sich bekannter Weise vor der eigentlichen Übertragung der Daten Ressourcen in dem oder den Knotenpunkten, die zwischen dem Steuersystem bzw. der wenigstens einen Einrichtung dieses und dem Feldbus liegen, reserviert, was unter Verwendung eines Reservierungsprotokolls möglich ist. Durch die Verwendung eines Reservierungsprotokolls für den Echtzeit-Fluss wird die komplexe Konfiguration automatisch im Netzwerk durchgeführt, wobei die jeweils vorliegende Topologie genutzt wird.

Bei Ressourcen, die reserviert sind und/oder werden, kann es sich beispielsweise um Adresstabelleneinträge, Framebuffer, transmit time slices, Bandbreite, Jitter, Latenz etc. handeln.

In bevorzugter Ausgestaltung ist vorgesehen, dass als Ressourcen für den wenigstens einen Stream Adresstabelleneinträge und/oder Framebuffer und/oder Bandbreite an einem oder mehreren Knotenpunkten des Netzwerkes reserviert sind und/oder werden. Besonders bevorzugt sind und/oder werden an wenigstens einem Knotenpunkten zumindest ein Adresstabelleneintrag und Framebuffer und Bandbreite reserviert.

Die Übertragung von Daten, die von dem Steuersystems stammen und für wenigstens ein an einem Feldbus anliegendes Gerät bestimmt sind, erfolgt bevorzugt über genau einen Stream zwischen dem Steuersystem bzw. wenigstens einer Einrichtung dieses und dem Feldbus. Alternativ oder zusätzlich erfolgt die Übertragung von Daten, die von wenigstens einem an einem Feldbus anliegenden Gerät stammen und für das Steuersystem bestimmt sind, über genau einen (weiteren) Stream zwischen dem Feldbus und dem Steuersystem bzw. wenigstens einer Einrichtung dieses.

Entsprechend erfolgt die gesamte Datenübertragung in beide Richtungen zwischen Steuersystem und Feldbus über zwei Streams, für die an einem oder mehreren zwischen dem Steuersystem bzw. wenigstens einen Einrichtung dieses und dem Feldbus liegenden Knotenpunkten, insbesondere Switches und/oder Bridges, Ressourcen reserviert sind oder werden, wobei über einen Stream Daten von dem Steuersystem bzw. einer Einrichtung dieses an den Feldbus und über den zweiten Stream Daten von dem Feldbus zu dem Steuersystem bzw. dessen wenigstens einer Einrichtung übertragen werden.

Ob genau ein Stream für die eine Richtung und/oder genau ein Stream für die andere Richtung vorliegt, kann insbesondere daran ausgemacht werden, dass (für jede Richtung) genau eine Stream-ID vorliegt.

Innerhalb eines Feldbusses kann die Datenübertragung weiterhin gemäß dem oder den zugehörigen, bestehenden Feldbus-Standards erfolgen, im Falle von PROFINET beispielsweise via Ethernet ohne AVB- oder TSN-Erweiterung (insbesondere gemäß IEEE 802.3). Insbesondere erfolgt die Datenübertragung zwischen einem oder mehreren Geräten, insbesondere wenigstens einem Sensor und/oder wenigstens einem Aktor, und dem Verbindungsknotenpunkt, bevorzugt dessen Feldbus-Port, gemäß dem oder den zum Feldbus gehörigen Standard(s).

Eine weitere besonders bevorzugte Ausführungsform des erfindungsgemäßen Verfahrens zeichnet sich dadurch aus, dass dem Feldbus und/oder dem oder den an dem Feldbus liegenden Geräten eine eindeutige ID zugeordnet ist, und das Steuersystem anhand der eindeutigen ID dem Feldbus automatisiert zugeordnet wird.

Als eindeutige ID für die automatische Zuordnung wird bevorzugt ein Universal Unique Identifier, insbesondere von PROFINET oder PROFIBUS, verwendet.

Besonders bevorzugt ist das Steuersystem als virtuelles Steuersystem ausgebildet und wird das virtuelle Steuersystem dem Feldbus automatisiert anhand einer ID des (jeweiligen) Feldbusses dem (jeweiligen) Feldbus zugeordnet.

Im Anschluss an eine insbesondere automatisierte Zuordnung des Steuersystems zum Feldbus kann einer bzw. können mehrere, insbesondere zwei Streams zwischen dem Steuersystem bzw. wenigstens einen Einrichtung dieses und dem Feldbus aufgebaut werden, um eine Steuerungs-Funktionalität und/oder einen oder mehrere Netzwerkdienste in den Feldbus zu bringen.

Es kann prinzipiell nur ein Steuersystem vorgesehen sein, dessen Automatisierungs- und/oder Netzwerkfunktion erfindungsgemäß via Stream an einen Feldbus angebunden ist.

Selbstverständlich kann aber auch vorgesehen sein, dass zwei oder mehr Feldbusse mit jeweils einem oder mehreren daran liegenden Geräten vorgesehen sind und zwei oder mehr, bevorzugt jedem Feldbus ein Steuersystem zugeordnet ist, und eine Datenübertragung zwischen dem jeweiligen Steuersystem und dem zugehörigen Feldbus über wenigstens einen Stream erfolgt, für den an einem oder mehreren zwischen dem jeweiligen Steuersystem bzw. wenigstens einer Einrichtung des jeweiligen Steuersystems und dem zugehörigen Feldbus liegenden Knotenpunkten Ressourcen reserviert sind oder werden.

Natürlich können einem Feldbus auch mehrere Steuersysteme zugeordnet sein.

Sind mehrere Steuersysteme und/oder mehrere Feldbusse vorhanden, kann die erfindungsgemäße Auslagerung und Stream-Anbindung nur für einen Feldbus und ein oder mehrere zugehörige Steuersysteme vorgesehen sein oder auch für mehrere, ggf. alle Feldbusse und zugehörige Steuersysteme.

Ein weiterer Gegenstand der vorliegenden Erfindung ist ein Steuerungsverfahren für einen industriellen technischen Prozess oder ein Fahrzeug, bei dem zwischen wenigstens zwei Komponenten einer Automatisierungsanlage, insbesondere zwischen wenigstens einem an einem Feldbus liegenden Gerät und wenigstens einem Steuersystem der Automatisierungsanlage Daten unter Durchführung des Verfahrens nach einem der vorhergehenden Ansprüche ausgetauscht werden und auf Basis der ausgetauschten Daten eine Steuerung des industriellen technischen Prozesses oder Fahrzeugs erfolgt.

Gegenstand der Erfindung ist darüber hinaus eine Vorrichtung umfassend
- wenigstens ein insbesondere virtuelles Steuersystem,
- eines oder mehrere an einem Feldbus befindliche Geräte, insbesondere wenigstens einen Sensor und/oder wenigstens einen Aktor,
- einen oder mehrere zwischen dem wenigstens einen Steuersystem oder wenigstens einer Einrichtung des Steuersystems und dem Feldbus liegende bevorzugt AVB- oder TSN-fähige Knotenpunkte, insbesondere Switches und/oder Bridges,
wobei die Vorrichtung zur Durchführung des erfindungsgemäßen Verfahrens zur Daten-Kommunikation bzw. des erfindungsgemäßen Steuerungsverfahrens ausgebildet und eingerichtet ist.

Umfasst die erfindungsgemäße Vorrichtung wenigstens eine virtuelles Steuersystem, insbesondere wenigstens eine virtuelle speicherprogrammierbare Steuerung (SPS), weist dieses bevorzugt wenigstens eine Recheneinrichtung insbesondere in Form eines Computers auf, auf der wenigstens ein Computerprogramm abgelegt ist, das die Funktionen eines Steuersystems, insbesondere einer speicherprogrammierbaren Steuerung, emulieren kann.

Die wenigstens eine Recheneinrichtung umfasst dann bevorzugt in an sich bekannter Weise wenigstens einen Prozessor, Arbeitsspeicher und einen Datenspeicher, etwa eine Festplatte. Auf der Recheneinrichtung kann ferner ein Betriebssystem installiert sein.

Ein Knotenpunkt der erfindungsgemäßen Vorrichtung ist bevorzugt als Verbindungsknotenpunkt ausgebildet, bei dem eines oder mehrere der vorstehend im Zusammenhang mit dem erfindungsgemäßen Verfahren für den Verbindungsknotenpunkt beschriebenen Merkmalen verwirklicht ist.

Die erfindungsgemäße Vorrichtung kann einen Teil einer Automatisierungsanlage für einen industriellen technischen Prozess darstellen, welche dann bevorzugt ebenfalls Gegenstand der Erfindung ist.

Weiterhin betrifft die Erfindung ein Computerprogramm, das Programmcodemittel zur Durchführung der Schritte des erfindungsgemäßen Verfahrens zur Daten-Kommunikation bzw. des erfindungsgemäßen Steuerungsverfahrens umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens zur Daten-Kommunikation bzw. des erfindungsgemäßen Steuerungsverfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung einer Ausführungsform des Verfahrens der vorliegenden Erfindung unter Bezugnahme auf die beiliegende Zeichnung deutlich. Darin ist
- FIG 1: eine rein schematische Darstellung einer konventionellen Anordnung eines Feldbusses einer industriellen Automatisierungsanlage;
- FIG 2: eine rein schematische Darstellung eines Feldbusses einer industriellen Automatisierungsanlage mit ausgelagerter, über zwei TSN-Streams an den Feldbus angebundener virtueller SPS;
- FIG 3: eine rein schematische, vergrößerte Darstellung des vSPS-Connectors aus Figur 2, wobei die beiden an einem Port in Richtung der SPS ankommenden Streams jeweils durch einen Pfeil (links) und die an dem Feldbus-Port ankommenden Ethernet-Datenframes durch einen Doppelpfeil (rechts) angedeutet sind;
- FIG 4: eine rein schematische Darstellung eines Ethernet-Datenframes, der aus dem Feldbus an einem Port des vSPS-Connectors aus Figur 3 ankommt;
- FIG 5: eine rein schematische Darstellung eines Datenframes, der an dem in Richtung der SPS weisenden Port des vSPS-Connectors aus Figur 3 ankommt;
- Figur 6: eine rein schematische Darstellung eines Switches mit einem TSN-Port (links) und einem PROFINET-Port (rechts), der den vSPS-Connector aus Figur 3 bilden kann;
- FIG 7: eine rein schematische Darstellung eines Switches mit logischer Konfiguration, der den vSPS-Connector aus Figur 3 bilden kann; und
- FIG 8: eine rein schematische Darstellung zweier Feldbusse einer industriellen Automatisierungsanlage mit ausgelagerter, über jeweils zwei TSN-Streams an den jeweiligen Feldbus angebundener virtueller SPS.

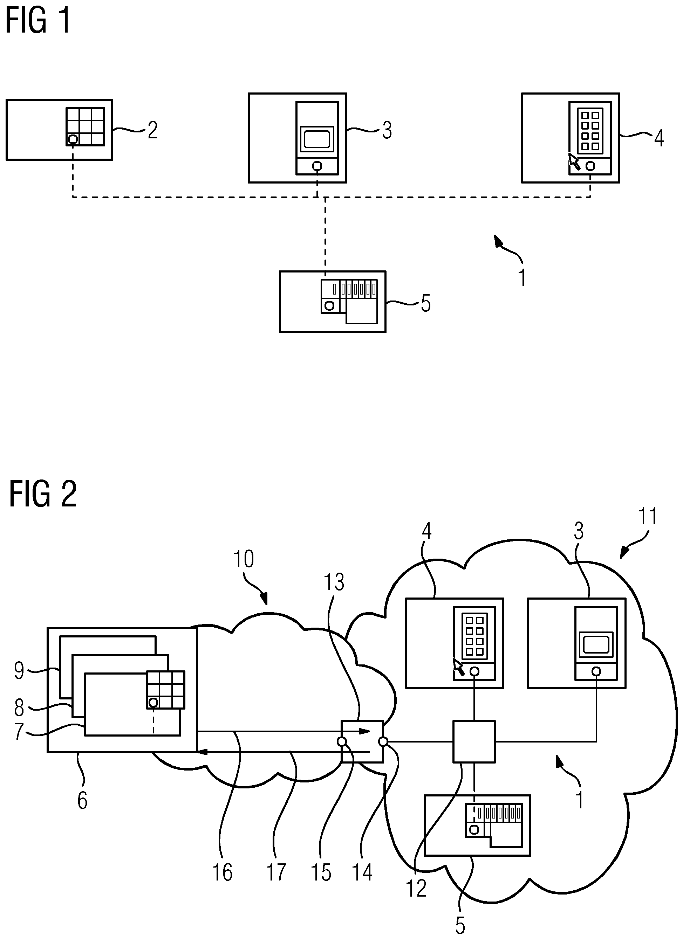

Die FIG 1 zeigt in rein schematischer Darstellung vier Geräte einer industriellen Automatisierungsanlage für einen in den Figuren nicht weiter dargestellten technischen Prozess, die für einen Datenaustausch untereinander über einen Ethernet-basierten Feldbus 1, konkret einen PROFINET-Feldbus, miteinander verbunden sind. Gezeigt ist dabei der logische Bus, der auf einem in der FIG 1 nicht weiter dargestellten Ethernet-Netzwerk basiert.

Bei den vier Geräten handelt es sich um eine speicherprogrammiere Steuerung, die im Weiteren als SPS 2 bezeichnet wird, eine Anzeige-Vorrichtung in Form eines Bildschirmes 3, ein Bediener-Panel 4 und ein Eingabe/Ausgabe-, also I/O-Gerät 5, das einen oder mehrere in der FIG nicht dargestellte Sensoren und/oder Aktoren der Automatisierungsanlage umfasst bzw. mit einem solchen oder solchen verbunden ist. Es sei betont, dass der eine Bildschirm 3, das eine Bediener-Panel 4 und insbesondere das eine I/O-Gerät 5 beispielhaft gezeigt sind und viele weitere Feldgeräte, insbesondere I/O-Geräte 5, an den Feldbus 1 angeschlossen sind bzw. werden können.

Im Betrieb der nicht weiter gezeigten Automatisierungsanlage werden in an sich bekannter Weise Daten zwischen der SPS 2 und den Feldgeräten 3, 4, 5 ausgetauscht. Insbesondere werden von den I/O-Geräten 5 im Betrieb mittels Sensoren erfasste Messwerte an die SPS 2 gesendet und von dieser u.a. auf Basis der Messwerte ermittelte Steuerwerte für Aktoren der Automatisierungsanlage werden von der SPS 2 an I/O-Geräte 5 gesendet. Auch werden Daten von der SPS 2 an den Bildschirm 3 gesendet, um dort für einen Benutzer visualisiert zu werden und es werden Daten, die insbesondere Benutzerbefehle repräsentieren, von dem Bediener-Panel 4 an die SPS 2 gesendet.

Die Datenübertragung erfolgt dabei in Form von Ethernet-Datenframes und hat in Echtzeit zu erfolgen. Vorliegend wird auf den unter dem Markennamen PROFINET bekannten Industrial-Ethernet-Standard zurückgegriffen.

Damit die Echtzeitanwendung nicht gestört wird, ist das Netzwerk exklusiv für die SPS 2 da. Im Feldbus 1 Netzwerk selbst gibt es keinen besonderen Schutz der Ressourcen - das Netzwerk stellt die Funktion eines logischen Bus zum Datenaustausch bereit. Die SPS 2 enthält alle für den Betrieb des Feldbusses 1 notwendigen Services. Die Hauptfunktion der SPS 2 ist die Steuerung des Prozesses anhand der auszuwertenden Sensorinformationen.

Die SPS 2 ist im Feldbus 1 und direkt in der Umgebung der Sensoren und Aktoren vorgesehen, also ebenfalls nah an dem bzw. den zu automatisierenden Prozess(en). Sie muss entsprechend in der gleiche rauen Umgebungen funktionieren wie die Sensoren und Aktoren. Die hohe erforderliche Funktionalität der SPS 2 in Kombination mit der geforderten Zuverlässigkeit auch in rauen Umgebungen führt zu einem hohen Preis der SPS 2.

Diesen Problematiken aus dem Stand der Technik wird erfindungsgemäß damit begegnet, dass eine virtuelle SPS 6 herangezogen, diese an einem von der eigentlichen Prozessumgebung entfernten Ort angeordnet wird, und TSN-Mechanismen verwendet werden, um die ausgelagerte, entfernte virtuelle SPS 2 an das Feldbusnetzwerk in Prozessnähe über TSN-Streams anzubinden. Dies ist - rein schematisch - in FIG 2 gezeigt.

Die virtuelle SPS 6 (auch als vSPS 6 bezeichnet) umfasst eine in den rein schematischen Figuren nicht erkennbare Recheneinrichtung in Form eines Computers, konkret Industrie-PCS, auf dem eine Sammlung von Computerprogrammen abgelegt ist, die die Funktionen einer (physischen) SPS 2 emulieren. Die virtuelle SPS 6 umfasst neben der eigentlichen Automatisierungsanwendung 7 für die Prozess-Automatisierung noch weitere Anwendungen, konkret eine Netzwerkdiensteanwendung 8 für die Netzwerkadministration und eine weitere Anwendung 9 für die Berechnung der Darstellung auf dem Bildschirm 3. Es sei angemerkt, dass es die erfindungsgemäß vorgesehene Stream-Anbindung auch ermöglicht, die Automatisierungsaufgabe beispielsweise auf ein lokales Data Center auszulagern.

Die virtuelle SPS 6 ist über ein TSN-Netzwerk 10 mit dem Ethernet-basierten Feldbus-Netzwerk 11 verbunden. Die Netzwerke 10, 11 sind in der FIG 2 jeweils durch eine Wolke angedeutet. Sowohl das TSN-Netzwerk 10 als auch das Feldbus-Netzwerk 11 umfassen jeweils mehrere Knotenpunkte in Form von Switches. Von den Switches der Netzwerke 10, 11 ist in der FIG jeweils nur einer beispielhaft gezeigt, konkret ein Switch 12 des Feldbusses 1 und ein TSN-fähiger Switch des TSN-Netzwerkes 10, welcher einen Verbindungsknotenpunkt zur Stream-Anbindung der virtuellen SPS 6 an den Feldbus 1 via Stream bildet und im Folgenden als vSPS-Connector 13 bezeichnet wird.

Der vSPS-Connector 13 hat bei dem dargestellten Ausführungsbeispiel zwei Ports, von denen ein Port 14 im Feldbus 1 liegt und ein Port in Richtung der vSPS 6. Der im Feldbus 1 liegende Port wird im Folgenden auch als Feldbus-Port 14 bezeichnet und der Port in Richtung der vSPS 6 als SPS-Port 15. Zwischen dem vSPS-Connector 13 und der vSPS 6 sind erfindungsgemäß zwei in der FIG 2 jeweils durch einen Pfeil angedeutete Streams 16, 17 eingerichtet. Dabei dient ein Stream 16 der Übertragung von Daten von der vSPS 6 zu dem vSPS-Connector 13 und der andere Stream 17 der Übertragung von Daten von dem vSPS-Connector 13 zu der vSPS 6.

Sämtliche für die Einrichtung der Streams 16, 17 benötigten Parameter sind ohnehin im Engineering des Feldbusses 1 vorhanden, insbesondere in dem TIA Portal, und können auf einfache Weise verwendet werden. Als Beispiele für diese Parameter seien die Paketgröße, Paketanzahl, die sich dadurch ergebende Bandbreite, der update-Cycle, das Sendeintervall und die Latenz genannt.

Den an dem Feldbus 1 liegenden Feldgeräten 3, 4, 5 ist ferner eine eindeutige ID zugeordnet, konkret ein Universal Unique Identifier (UUID) von PROFINET. Anhand der UUID wird die vSPS 6 dem Feldbus 1 automatisiert zugeordnet.

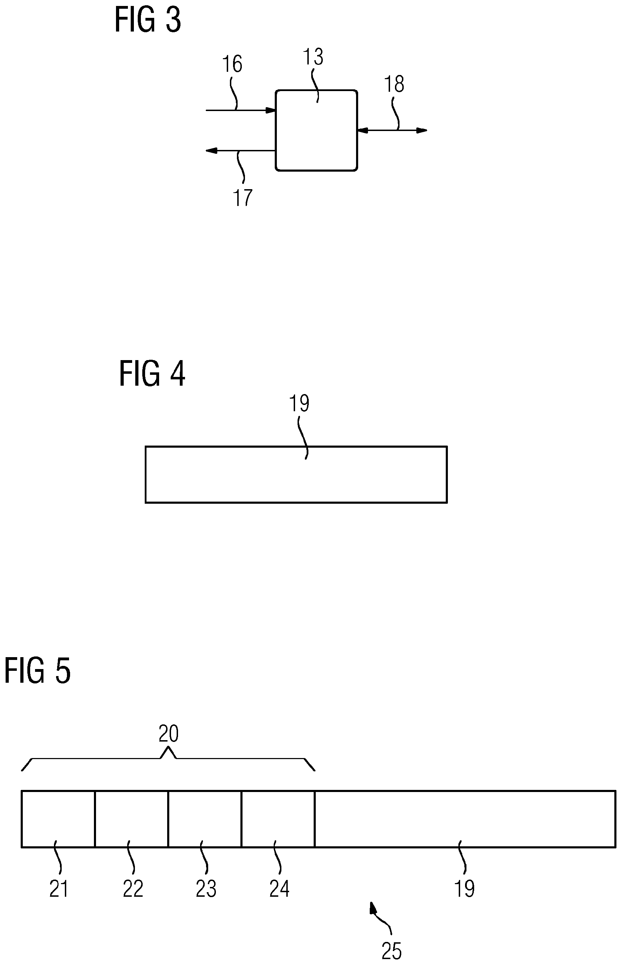

In der FIG 3 ist eine vergrößerte Darstellung des vSPS-Connectors 13 mit einem Stream 16 in dessen Richtung, einem von diesem abgehenden Stream 17 und einem Doppelpfeil 18 auf der Seite des in FIG 3 nicht dargestellten Feldbus-Ports 14 gezeigt, wobei der Doppelpfeil 18 andeutet, dass Ethernet-Datenframes 19 (vgl. FIG 4) aus dem Feldbus 1 an dem Feldbus-Port 14 ankommen und von diesem in Feldbus-Richtung abgehen.

Es ist eine logische Konfiguration vorgesehen, welche die Anbindung der vSPS 6 an den Ethernet-Feldbus 1 via Stream ermöglich, konkret ist eine entsprechend ausgestaltete, in den Figuren nicht dargestellte PRU in den vSPS-Connector 13 integriert, welche durch ihr Programm die Pakete gezielt manipuliert und die benötigte Kennzeichnung der Datenframes (vgl. FIG 5) hinzufügt oder entfernt.

Der vSPS-Connector 13 ist ausgebildet und eingerichtet, um Ethernet-Datenframes 19, die von den I/O-Geräten 5 bzw. Bedien-Panels 4 stammen und an dem Feldbus-Port 14 ankommen, einen Header 20 mit Stream-Parametern, konkret einer designierten Stream Adresse 21, einer Source-Adresse 22, einer VLAN ID 23 und eine Priorität 24 voranzustellen, und über den SPS-Port 15 in Richtung der virtuellen SPS 6 weiterzuleiten. Der Ethernet-Frame 19 mi vorangestelltem Header 20 bildet einen TSN-Stream-Datenframe 25 (vgl. FIG 5).

Der vSPS-Connector 13 ist weiterhin ausgebildet und eingerichtet, um aus TSN-Stream-Datenframes 25, welche via Stream 16, 17 an dem SPS-Port 15 ankommen, den Header 20 mit der designierten Stream Adresse 21, Source-Adresse 22, VLAN ID 2 und Priorität 24 zu entfernen und Datenframes ohne die entfernten Parameter, also Ethernet-Datenframes 19, über den Feldbus-Port 14 an den Feldbus 1 weiterzuleiten.

Der vSPS-Connector 13 und die in der FIG 2 nicht dargestellten weiteren Knotenpunkte des TSN-Netzwerkes 10 stellen TSN-fähige Geräte, konkret TSN-fähige Switche, dar.

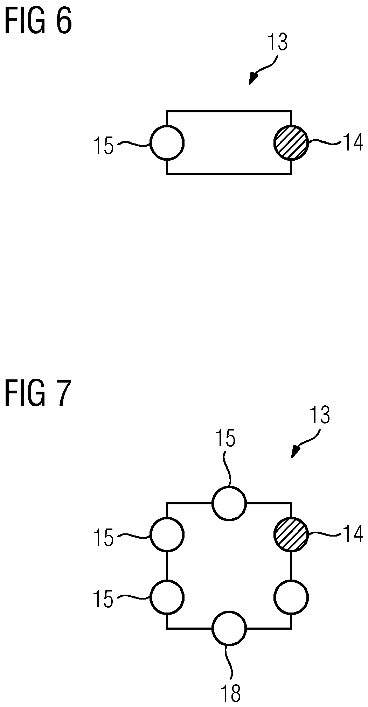

Die Figuren 6 und 7 enthalten noch zwei schematische Darstellungen zu dem vSPS-Connector 13. Konkret ist dieser der FIG 6 nochmals vereinfacht mit dem Feldbus-Port 14 und dem SPS-Port 15 dargestellt und die FIG 7 zeigt, dass beispielsweise auch mehr als ein Port 15 in Richtung der SPS 6 vorgesehen sein können. Zudem könnten zwei oder mehr Feldbusse 1 an einem Gerät angeschlossen sein (in diesen Figuren nicht dargestellt).

Sowohl für die Übertragung bzw. Weiterleitung von Datenframes 25 über den Stream 16 in Richtung des Feldbusses 1 als auch für die Übertragung bzw. Weiterleitung von Datenframes 25 über den Stream 17 in Richtung der vSPS 6 sind an dem vSPS-Connector 13 und sämtlichen weiteren zwischen diesem und der vSPS 6 liegenden Knotenpunkten Netzwerk-Ressourcen reserviert, was unter Verwendung eines Reservierungsprotokolls erzielt wurde.

Bei dem dargestellten Ausführungsbeispiel wurde für die Reservierung für beide Richtungen konkret auf das Stream Reservation Protocol (SRP) zurückgegriffen, welches als IEE802.1Qat standardisiert ist.

Durch die Reservierung sind die zu übertragenden Daten vor einer zu großen Einwirkung von anderen Echtzeitanwendungen und/oder sonstigen Anwendungen im Netzwerk geschützt. Andere Anwendungen haben insbesondere nur eine kleine, aber genau bekannte Auswirkung auf die Übertragungszeit. Durch die Ressourcenreservierung kommt es nicht zum Verlust von Echtzeit-daten.

Durch die gesicherte Datenübertragung als Stream(s) wird es möglich, das Steuersystem 6 außerhalb, insbesondere entfernt von der eigentlichen Prozessumgebung anzuordnen. Da es die Erfindung ermöglicht, das Steuersystem 6 außerhalb der in der Regel sehr rauen Prozessumgebung anzuordnen, muss diese keine besonderen Anforderungen in dieser Hinsicht erfüllen und deren Kosten fallen - im Vergleich zum Stand der Technik - deutlich geringer aus.

Alternativ zu dem in der FIG 2 dargestellten Ausführungsbeispiel mit einem Feldbus 1 und einer vSPS 6 können auch zwei oder mehr Feldbusse 1 und zwei oder mehr vSPS 6 (und/oder physische SPS 2) vorgesehen sein. Dann kann jede SPS an einen Prozess-fernen Ort ausgelagert und für die Datenübertragung über wenigstens einen, insbesondere genau zwei Streams 16, 17 an den jeweiligen Feldbus 1, dem die SPS 6 zugeordnet ist, angebunden sein.

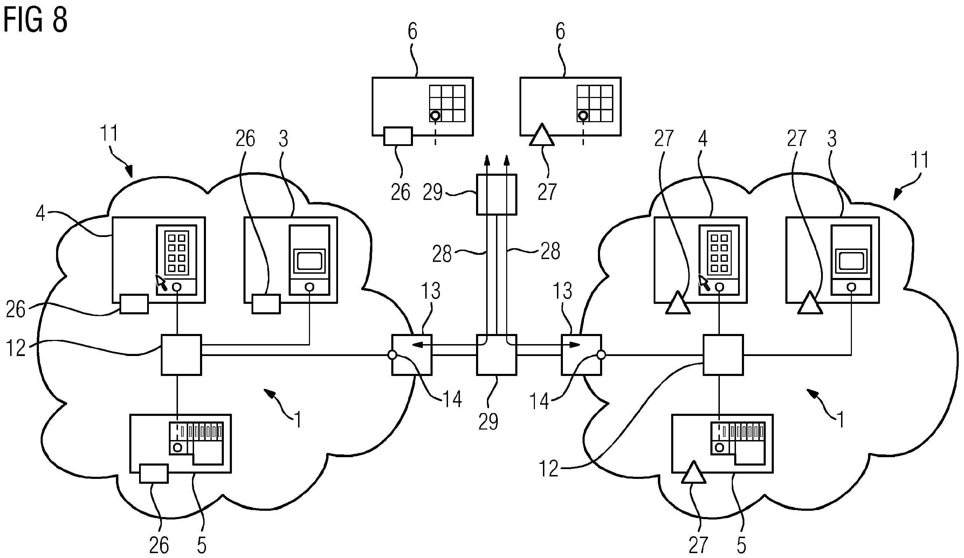

Eine Konstellation mit mehr als einem Feldbus 1 und mehr als einer SPS ist beispielhaft und schematisch in der FIG 8 gezeigt. Gleiche Komponenten sind darin mit gleichen Bezugsziffern versehen.

Konkret sind zwei virtuelle SPS 6 und zwei Feldbusse 1 mit Ethernet-basierten Feldbus-Netzwerken 10 vorgesehen, wobei jedem Feldbus 1 jeweils eine der vSPS 6 zugeordnet ist. Jede vSPS 6 ist außerhalb der direkten Prozessumgebung angeordnet über jeweils einen vSPS-Connector 13 mit dem jeweiligen Feldbus 1 verbunden.

Die Zuordnung von der jeweiligen vSPS 6 zu dem jeweiligen Feldbus 1 erfolgte auch hier automatisiert unter Verwendung der UUID des jeweiligen Feldbusses 1. In der FIG 8 sind die unterschiedlichen UUIDs für den einen und den anderen Feldbus 1 über Rechtecke 26 bzw. Dreiecke 27 an den jeweiligen Feldgeräten 3, 4, 5 des jeweiligen Feldbusses 1 und der zugehörigen vSPS 6 angedeutet.

Jede vSPS 6 ist über jeweils zwei Streams mit dem Feldbus 1 verbunden, dem sie zugeordnet ist. In der FIG 8 sind die zwei Streams - einer für die Datenübertragung in Richtung der jeweiligen vSPS 6 und einer für die Datenübertragung in Richtung des jeweiligen Feldbusses 1 - mit einem Doppelpfeil 28 angedeutet.

Die Datenübertragung zwischen der jeweiligen vSPS 6 und dem jeweiligen vSPS-Connector 13 via Stream erfolgt über ein TSN-Netzwerk mit mehreren Knotenpunkten, konkret TSN-fähigen Switches, wobei in der FIG 8 - in Abweichung von der FIG 2 - beispielshaft zwei TSN-fähige Switche 29 gezeigt sind.

Wie man erkennt, werden die TSN-Switche 29 für die Datenübertragung zwischen beiden Feldbusse 1 und der jeweils zugeordneten vSPS 6 genutzt. Sowohl an den TSN-Switches 29 als auch dem jeweiligen vSPS-Connector 13 sind vor der eigentlichen Datenübertragung Netzwerk-Ressourcen unter Verwendung von SRP reserviert worden.

Auch für den Fall, dass mehr als eine SPS 6 und/oder mehr als ein Feldbus 1 mit Feldgeräten 3, 4, 5 vorgesehen sind, ergeben sich sämtliche vorstehend im Zusammenhang mit der in FIG 2 dargestellten Konstellation erläuterten Vorteile insbesondere der robusten, garantierten Übertragung mit gesicherten Ressourcen und dem erheblichen Kostenvorteil.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Beispielsweise kann insbesondere für den Fall, dass eine Anwendung extrem kurze Zykluszeiten erfordert, was beispielsweis im Bereich von Motion Control Anwendungen der Fall sein kann, die eigentliche Automatisierungsaufgabe am Ort des Prozesses, insbesondere am Feldbus 1, verbleiben, und beispielsweise nur Netzwerkdienste erfindungsgemäß ausgelagert und via Stream(s) an den (jeweiligen) Feldbus 1 angebunden sein. Dann kann beispielsweise nur eine Netzwerksteuereinrichtung des (jeweiligen) Steuersystems 6 ausgelagert und über einen oder mehrere Streams an den (jeweiligen) Feldbus 1 angebunden sein, eine Prozesssteuereinrichtung des (jeweiligen) Steuersystems 6 hingegen an dem jeweiligen Feldbus 1 anliegen, also ein Feldgerät bzw. einen Feldbusteilnehmer bilden, wie es nach dem Stand der Technik für das gesamte Steuersystem vorgesehen ist. Die (jeweilige) Prozesssteuereinrichtung muss dann keine Netzwerkdienste ausführen, und kann einfachere Komponenten umfassen, was wiederum eine deutliche Kostenersparnis ermöglicht.

## Patentansprüche

1. Verfahren zur Daten-Kommunikation in einem insbesondere industriellen Netzwerk, bei dem Daten zwischen einem Steuersystem, insbesondere einer SPS (6), und einem oder mehreren an einem Feldbus (1) befindlichen Geräten (3, 4, 5), insbesondere wenigstens einem Sensor und/oder wenigstens einem Aktor, ausgetauscht werden,
**dadurch gekennzeichnet, dass**
eine Datenübertragung zwischen dem Steuersystem (6) und dem Feldbus (1) über wenigstens einen Stream (16, 17, 28) erfolgt, für den an einem oder mehreren Knotenpunkten, insbesondere Bridges und/oder Switches, Ressourcen reserviert sind oder werden.

2. Verfahren nach Anspruch 1,
**dadurch gekennzeichnet, dass**
das Steuersystem (6) bzw. wenigstens eine Einrichtung des Steuersystems über einen Verbindungsknotenpunkt (13), der einen an dem Feldbus (1) befindlichen Feldbusport (14) und wenigstens einen Port (15) in Richtung des Steuersystems (6) bzw. der wenigstens einen Einrichtung des Steuersystems (6) aufweist, mit dem Feldbus (1) verbunden ist, und die Datenübertragung zwischen dem Steuersystem (6) bzw. der wenigstens einen Einrichtung des Steuersystems (6) und dem Verbindungsknotenpunkt (13) über wenigstens einen Stream (16, 17, 28) erfolgt, wobei bevorzugt an dem Verbindungsknotenpunkt (13) und/oder an einem oder mehreren zwischen dem Verbindungsknotenpunkt (13) und dem Steuersystem (6) bzw. der wenigstens einen Einrichtung des Steuersystems (6) liegenden weiteren Knotenpunkten (29) Ressourcen für die Datenübertagung via Stream (16, 17, 28) reserviert sind oder werden.

3. Verfahren nach Anspruch 2,
**dadurch gekennzeichnet, dass**
der Verbindungsknotenpunkt (13) ausgebildet und eingerichtet ist, um Datenframes (19), die von einem oder mehreren an dem Feldbus (1) befindlichen Geräten (3, 4, 5) stammen und an dem Feldbusport (14) ankommen, wenigstens einen Stream-Parameter, insbesondere eine designierte Stream Adresse (21) und/oder eine VLAN ID (23) und/oder eine Priorität (24) zuzuweisen, insbesondere voranzustellen, und über wenigstens einen Port (15) in Richtung des Steuersystems (6) bzw. der wenigstens einen Einrichtung des Steuersystems (6) weiterzuleiten, und/oder um aus Datenframes (25), welche via Stream (16, 17, 28) an einem Port (15) in Richtung des Steuersystems (6) bzw. der wenigstens einen Einrichtung des Steuersystems (6) ankommen, wenigstens einen Stream-Parameter, insbesondere eine designierte Stream Adresse (21) und/oder eine VLAN ID (23) und/oder eine Priorität (24) zu entfernen und/oder Nutzdaten zu extrahieren und Datenframes (19) ohne den wenigstens einen entfernten Parameter bzw. die Nutzdaten über den Feldbusport (14) weiterzuleiten.

4. Verfahren nach einem der vorhergehenden Ansprüche,
**dadurch gekennzeichnet, dass**
der Verbindungsknotenpunkt (13) und/oder gegebenenfalls vorhandene zwischen dem Verbindungsknotenpunkt (13) und dem Steuersystem (6) bzw. wenigstens einer Einrichtung des Steuersystems (6) liegende weitere Knotenpunkte (29) als AVB- oder TSN-fähige Knotenpunkte ausgebildet sind.

5. Verfahren nach einem der vorhergehenden Ansprüche,
**dadurch gekennzeichnet, dass**
die Reservierung von Ressourcen unter Verwendung eines Reservierungsprotokolls durchgeführt wird.

6. Verfahren nach einem der vorhergehenden Ansprüche,
**dadurch gekennzeichnet, dass**
die Datenübertragung zwischen dem Steuersystem (6) und dem Feldbus (1) über zwei Streams (16, 17, 28) erfolgt, für die an einem oder mehreren zwischen dem Steuersystem (6) bzw. wenigstens einer Einrichtung des Steuersystems (6) und dem Feldbus (1) liegenden Knotenpunkten (13, 29), insbesondere Switches und/oder Bridges, Ressourcen reserviert sind oder werden, wobei über einen Stream (16 17, 28) Daten von dem Steuersystem (6) an den Feldbus (1) und über den zweiten Stream Daten von dem Feldbus (1) zu dem Steuersystem (6) übertragen werden.

7. Verfahren nach einem der vorhergehenden Ansprüche,
**dadurch gekennzeichnet, dass**
die Datenübertragung innerhalb des Feldbus (1) gemäß einem zu dem Feldbus (1) gehörigen Standard erfolgt.

8. Verfahren nach einem der Ansprüche 2 bis 4 und 7,
**dadurch gekennzeichnet, dass**
Daten zwischen einem oder mehreren in dem Feldbus (1) befindlichen Geräten (3, 4, 5), insbesondere wenigstens einem Sensor und/oder wenigstens einem Aktor, und dem Verbindungsknotenpunkt (13) gemäß einem zu dem Feldbus (1) gehörigen Standard übertragen werden.

9. Verfahren nach einem der vorhergehenden Ansprüche,
**dadurch gekennzeichnet, dass**
das Steuersystem als virtuelles Steuersystem (6) ausgebildet ist, das wenigstens eine Recheneinrichtung insbesondere in Form eines Computers umfasst, auf der wenigstens ein Computerprogramm abgelegt ist, das die Funktionen eines Steuersystems, insbesondere einer speicherprogrammierbaren Steuerung, emulieren kann.

10. Verfahren nach einem der vorhergehenden Ansprüche,
**dadurch gekennzeichnet, dass**
das Steuersystem (6) eine Netzwerksteuereinrichtung, welche bevorzugt ausgebildet und eingerichtet ist, um Netzwerkdienste, insbesondere Feldbus-Netzwerkdienste auszuführen, und eine Prozesssteuereinrichtung, welche bevorzugt ausgebildet und eingerichtet ist, um auf Basis von mit Sensoren erfassten Messwerten Werte für Aktoren zu ermitteln, umfasst, und insbesondere eine Datenübertragung zwischen der Netzwerksteuereinrichtung und dem Feldbus (1) über wenigstens einen Stream (16, 17, 28) erfolgt, und/oder die Prozesssteuereinrichtung an dem Feldbus (1) liegt.

11. Verfahren nach einem der vorhergehenden Ansprüche,
**dadurch gekennzeichnet, dass**
dem Feldbus (1) und/oder dem oder den an dem Feldbus (1) liegenden Geräten (3, 4, 5) eine eindeutige ID zugeordnet ist, und das Steuersystem (6) anhand der eindeutigen ID dem Feldbus (1) automatisiert zugeordnet wird.

12. Verfahren nach Anspruch 11,
**dadurch gekennzeichnet, dass**
als eindeutige ID für die automatische Zuordnung ein Universal Unique Identifier insbesondere von PROFINET oder PROFIBUS verwendet wird.

13. Verfahren nach einem der vorhergehenden Ansprüche,
**dadurch gekennzeichnet, dass**
zwei oder mehr Feldbusse mit jeweils einem oder mehreren daran liegenden Geräten (3, 4, 5) vorgesehen sind und zwei oder mehr, bevorzugt jedem Feldbus (1) ein Steuersystem (6) zugeordnet ist, und eine Datenübertragung zwischen dem jeweiligen Steuersystem (6) und dem zugehörigen Feldbus (1) über wenigstens einen Stream (16, 17, 28) erfolgt, für den an einem oder mehreren zwischen dem jeweiligen Steuersystem (6) oder wenigstens einer Einrichtung des jeweiligen Steuersystems (6) und dem zugehörigen Feldbus (1) liegenden Knotenpunkten Ressourcen reserviert sind oder werden.

14. Steuerungsverfahren für einen industriellen technischen Prozess oder ein Fahrzeug, bei dem zwischen wenigstens zwei Komponenten einer Automatisierungsanlage, insbesondere zwischen wenigstens einem an einem Feldbus (1) liegenden Gerät (3, 4, 5) und wenigstens einem Steuersystem (6) der Automatisierungsanlage Daten unter Durchführung des Verfahrens nach einem der vorhergehenden Ansprüche ausgetauscht werden und auf Basis der ausgetauschten Daten eine Steuerung des industriellen technischen Prozesses oder Fahrzeugs erfolgt.

15. Vorrichtung umfassend
- wenigstens ein insbesondere virtuelles Steuersystem (6),
- eines oder mehrere an einem Feldbus (1) befindliche Geräte (3, 4, 5), insbesondere wenigstens einen Sensor und/oder wenigstens einen Aktor,
- einen oder mehrere zwischen dem wenigstens einen Steuersystem (6) oder wenigstens einer Einrichtung des Steuersystems (6) und dem Feldbus (1) liegende AVB- oder TSN-fähige Knotenpunkte (13, 28), insbesondere Switches und/oder Bridges,
wobei die Vorrichtung zur Durchführung des Verfahrens nach einem der Ansprüche 1 bis 14 ausgebildet und eingerichtet ist.

16. Computerprogramm umfassend Programmcode-Mittel zur Durchführung des Verfahrens nach einem der Ansprüche 1 bis 14.

17. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 14 durchzuführen.
